# EUROPEAN PATENT APPLICATION

(11) **EP 2 705 887 A1**
(43) Date of publication of application: **12.03.2014**
(21) Application number: 13183110.9
(22) Date of filing: 05.09.2013
(51) Int. Cl.: B01D 33/21, B01D 33/23, B01D 33/46, B01D 33/76

(54) **Rotary disc filter apparatus and related methods**

(30) Priority: 10.09.2012 US 201261698818 P; 12.08.2013 US 201313964618
(71) Applicant: Andritz, Inc., Glens Falls, NY 12801 (US)
(72) Inventor: Grace, Todd, Alpharetta, GA Georgia 30005 (US)
(74) Representative: HOFFMANN EITLE

(57) **Abstract**

The adaptation of a rotary drum filter structure to a accommodate filter discs (2, 102) within the existing rotary drum filter structure while using the existing rotary drum structure foundation, piping, etc. to allow a filter disc operation.

## Description

### BACKGROUND OF INVENTION

The invention generally relates to a rotary drum filter structure used in the pulp and paper industry, and other industries (such as but not limited to wastewater treatment, food processing, cement production, mining, etc.), to filter liquid out of a slurry of material, a slurry being comprised of liquid and solid material. In particular, the invention relates to a rotary drum filter structure used to filter pulp or lime mud (*e.g.*, a slurry with a high content of calcium carbonate, CaCO₃) out of a slurry of material.

Rotary drum filter structures are well known in the pulp and paper industry, and other industries, to filter liquid out of a slurry of material. Conventional rotary drum filter structures can include a cylindrically shaped filter drum that is generally constructed of metallic and/or fiberglass materials.

In operation, the filter drum is partially submerged in a vat, such as a drum vat, containing the slurry of material. As the liquid of the slurry moves through the filter drum of rotary drum filter structures in lime mud service, a layer of lime mud is formed on the outer surface of the filter drum. A scraper, such as a doctor blade, is used to scrape the layer of the surface of the lime mud off of the outer surface of the filter drum and move the lime mud to a drop point where it is discharged out of the rotary drum filter structure. Such lime mud is typically further processed by a lime kiln. The vat may be altered by raising the vat walls such that an entire filter surface may be submerged, and where both sides of the vat are the same height, and the overflow level is raised.

The filter drum rotates through a drum vat containing a slurry of lime mud such that the lower portion of the drum is submerged in the slurry. As the filter drum rotates out of the slurry, filtrate liquid is drawn from the lime mud slurry and through the filter drum by a vacuum system. The removal of filtrate dries and thickens the lime mud in the layer on the filter drum. At the end of the drying portion of the filter drum rotation, a scraper removes an outer layer of the dried lime mud from the surface of the filter drum. The dried lime mud removed by the scraper falls to a conveyor and moves away from the drum filter to be further processed.

While rotary drum filter structures perform the desired function, improved filtration may be possible when a disc filter structure is used in the filtering process. A disc filter structure has an increased surface area for filtering slurry material, *e.g.*, twice the surface area as a drum filter structure with comparable outside dimensions. Disc filter structures are also well known in the pulp and paper industry, and other industries, to filter liquid from a slurry of material such as pulp or lime mud. An example of a disc filter structure used to thicken lime mud is described in U.S. Patent No. 8,002,994, the contents of which are expressly incorporated by reference herein. A typical disc filter structure contains multiple filtering members and filter discs within a single disc filter structure. Each filter disc is comprised of multiple pie-shaped sectors, each pie-shaped sector is attached individually to the shaft of the disc filter structure to make a single whole filter disc.

In some disc filter structures, slurry is pumped via a feed conduit (or conduits) into a feed distributor pipe. From the feed distributor pipe, the slurry is distributed evenly into a main vat or the individual vats of the individual filter discs. As the filter discs rotate, a pressure difference generated by a negative pressure source (*e.g.*, a vacuum pump or centrifugal pump) results in the formation of a solid cake (in the case of a lime mud filter, a lime mud solid cake) on the surface of the individual filter discs. Scrapers may be arranged on either side of the individual filter discs to remove the lime mud. The lime mud then falls through openings between the filter discs onto a conveyor to move the lime mud out of the disc filter structure and on to be further processed.

A benefit of the disc filter structure over the rotary drum filter structure is greater surface area for the filtration of the slurry material. Although it is possible that some users of a rotary drum filter structure would benefit from the additional surface area of a disc filter structure, the existing equipment (drum vat, feed conduits and distributor pipe, conveyor, and support system/foundation) associated with a rotary drum filter structure can be costly to remove and replace with similar equipment for a new disc filter structure.

### SUMMARY OF THE INVENTION

It is believed that there is a need to use the equipment of an existing rotary drum filter structure and convert the filter structure into a structure allowing a filter disc operation. In order to fulfill this need, the present invention pertains to a method and the apparatus necessary to make such a conversion or retrofit of an existing rotary drum filter structure into a disc filter structure, as recited in the appended claims.

In one embodiment of the present invention, a filtration apparatus comprises a rotatable central shaft. The central shaft has at least two filter discs that are attached perpendicularly to the length of the central shaft. As previously stated, a filter disc is comprised of multiple pie-shaped sectors, each pie-shaped sector is attached individually to the shaft of the disc filter structure to make up one whole filter disc. The at least two filter discs are preferably generally cylindrical with a diameter greater than a height. A vat contains a slurry of feed material having liquid and solids. The at least two filter discs contact the slurry of feed material. A pump draws filtrate (liquid) through the at least two filter discs, such that solids form on at least one outside surface of a filter disc. Scrapers scrape the solids formed on each of the at least one outside surfaces. Below each scraper is a first conveyor (the first conveyor may be a new conveyor installed as part of a filter disc retrofit) and optionally a first conveyor trough (which may also be new - new conveyor trough) substantially perpendicular to the central shaft, such that each first conveyor moves the scraped-off solids out of the filtration apparatus and to a second conveyor (which may be a collection conveyor that existed prior to the filter disc retrofit - pre-existing collection conveyor) that collects the scraped-off solids from the at least two filter discs to be further processed.

In at least some embodiments of the filtration apparatus, at least one scraper is configured to remove the solids formed on the at least one outside surface of at least one filter disc. These scrapers may be located on either side of and above the at least one first conveyor, and extend from the shaft end of the at least one first conveyor to a point along the at least one first conveyor where the filter discs end.

In at least some embodiments of the filtration apparatus the at least one first conveyor extends beyond the vat wall and above the second collection conveyor and is mounted to the vat at a crossing point where the at least one first conveyor crosses the vat.

In another embodiment of the present invention, a method for filtering a slurry of feed material having liquid and solids is disclosed. The method includes feeding the slurry of feed material to a vat, dipping at least two filter discs attached to a central shaft into the vat, removing filtrate through the at least two filter discs via a pump or other suitable means and leaving solids on the surface of the at least two filter discs, removing the solids from the surface of the at least two filter discs, transferring the removed solids via at least one new conveyor that are substantially perpendicular to the central shaft to move the solids outside the filter structure to a pre-existing collection conveyor, which moves the solids to be further processed.

In yet another embodiment of the present invention, a method of converting a pre-existing rotary drum filter structure comprising a rotatable drum, a vat, for example, a drum vat, and a pre-existing collection conveyor into a disc filter structure is disclosed. The method comprises removing the rotatable drum used as a filter and replacing it with at least two filter discs that are substantially cylindrical, each filter disc being attached to a rotatable central shaft having an axis substantially coincident with each axis of the at least two filter discs.

The method may further comprise providing at least two scrapers to remove solids from a surface of each of the at least two filter discs and providing at least one new conveyors (conveying device) between opposing surfaces of the at least two adjacent filter discs, that are substantially perpendicular to the central shaft to transport the removed solids out of the filtration apparatus and to the pre-existing collection conveyor (the pre-existing collection conveyor is substantially perpendicular to the new conveyors) for movement of the solids for further processing.

In some embodiments, the method may further comprise raising the vat walls such that an entire filter disc surface may be submerged, wherein the sides of the vat are the same height, and the overflow level is raised.

In yet another embodiment of the present invention, compressed air is used to blow or lift off the material on the at least one filter discs. The material then falls into a new conveyor located between or on the outside of the filter discs to be conveyed outside the filter disc equipment and on to be further processed.

In yet another embodiment of the present invention, water is used to lift off the material on the at least one filter discs. The material then falls into a new conveyor located between or on the outside of the filter discs to be conveyed outside the filter disc equipment and on to be further processed.

In yet another embodiment of the present invention, the outer face on the two outside filter discs, filter discs at both ends of the shaft, are unused such that no material removal device (scraper, compressed air, or water) is required on this outer face side of the filter disc.

### BRIEF DESCRIPTION OF THE DRAWINGS

FIG. 1 illustrates an exemplary embodiment of a disc filter apparatus in accordance with an aspect of the present disclosure.

FIG. 2 illustrates an exemplary embodiment of a conveyor in accordance with an aspect of the present disclosure.

FIG. 3 illustrates a bottom view of an exemplary embodiment of a screw conveyor having a trough in accordance with an aspect of the present disclosure.

FIG. 4 illustrates an exemplary embodiment of a vat in accordance with an aspect of the present disclosure.

FIG. 5 illustrates a cross-sectional view of an exemplary embodiment of a disc filter apparatus, new conveyor, and pre-existing collection conveyor in accordance with an aspect of the present disclosure.

### DETAILED DESCRIPTION OF THE INVENTION

Several embodiments of the present invention are described below and illustrated in the accompanying drawings. The present disclosure illustrates methods for converting, or retrofitting, a pre-existing rotary drum filter structure to a new disc filter structure, and apparatuses associated therewith. In accordance with the present disclosure, at least two filter discs may be mounted inside a pre-existing rotary drum filter structure. Pre-existing feed conduits leading to the pre-existing rotary drum filter structure may be used with little or no modification required. For example, after conversion to the new disc filter structure, the support system/foundation and associated piping, *e.g.*, slurry feed material piping and removal configurations may be unmodified.

Multiple, *e.g.*, at least two (including 3, 4, 5, 6, 7, or more), filter discs are mounted to a center shaft. There may be a scraper on each face of each filter disc and a new conveying device or set of conveying devices corresponding to and below each scraper. Depending on the type of new conveying devices employed, *e.g.*, screw conveyors, belt conveyors, vibratory conveyors, drag chain conveyors, or any other conventional conveying equipment, a new conveyor trough may at least partially contain the new conveyors.

The new conveying devices preferably include a scraper along each side of the new conveying devices, although it is envisioned that at least one side of the new conveying devices has a scraper. These scrapers may allow for the removal of the lime mud from the filter discs. If a new conveyor is used in connection with a new conveyor trough, the scrapers may direct the removed lime mud into the new conveyor troughs of the new conveying devices where the new conveyors move the lime mud out of the filter structure to the pre-existing collection conveyor along the length of the pre-existing drum filter structure. The pre-existing collection conveyor may serve to collect the lime mud and, using the pre-existing collection conveyor the mud is moved away from the disc filter structure to pre-existing equipment for further processing.

In an aspect, the present disclosure relates to scrapers and new conveyors, which can optionally be comprised of a new conveyor trough and at least one new conveyor within the new conveyor trough, provided between the filter discs and optionally on the outside of the two outside filter discs. Preferably, each new conveyor is mounted to the vat and the scrapers are mounted to the new conveyors.

If the new conveyors each include a new conveyor trough, such as a new conveyor trough typically used in connection with a screw conveyor, the new conveyor troughs may have an opening at or near the end to allow the lime mud to fall onto the pre-existing collection conveyor to be moved away from the disc filter structure and further processed. Each scraper and new conveyor may be directly or indirectly connected to the pre-existing vat at the point where the new conveyors cross the pre-existing vat. The new conveyors (possibly including new conveyor troughs) may be cantilevered into the vat or be supported from the vat.

The new conveyor troughs have scrapers located on at least one side of the new conveyor trough and along the top of the new conveyor trough extending from the central shaft end of the new conveyor trough to a point along the new conveyor trough where the dis filters end to remove solids from the filter surface. Additionally, the new conveyor trough and the at least one new conveyor are substantially perpendicular to the central shaft to transport the removed solids from the at least one new conveyor to the collection conveyor. Also, the new invention provides the collection conveyor substantially perpendicular to the at least one new conveyor for removal of solids from the filter structure.

It is also possible for the scrapers to be located on both sides of the new conveyor trough along the top of the new conveyor trough extending from the shaft end of the new conveyor trough to a point along the new conveyor trough where the filter discs end.

Although the apparatus and filtration method has been described with special mention of lime mud, it should be understood that the apparatus and filtration method may be used for retrofitting drum filter structures in other services both in the paper and pulp industry and outside the paper and pulp industry.

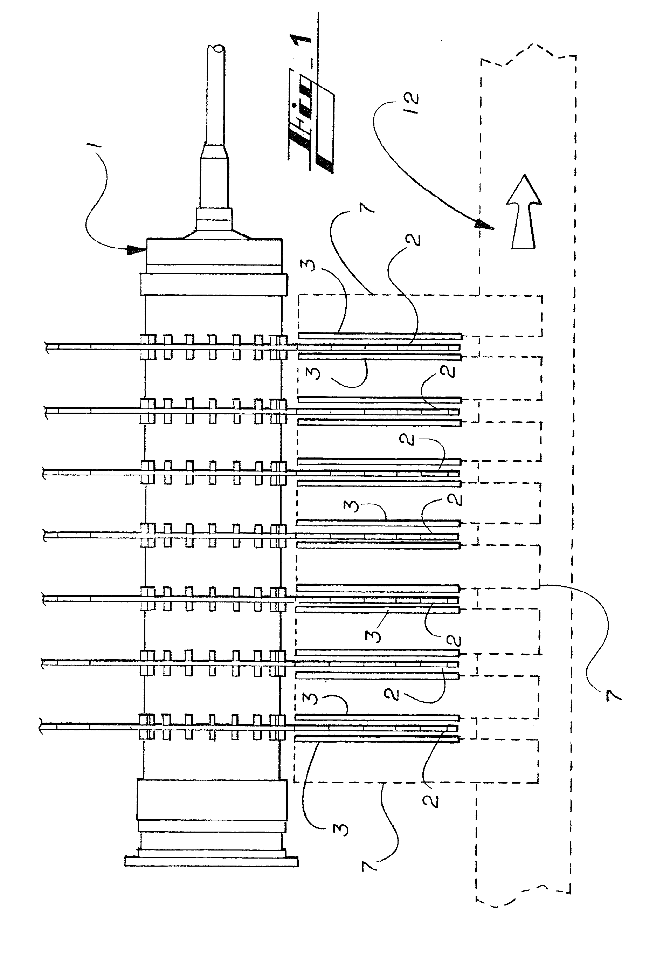

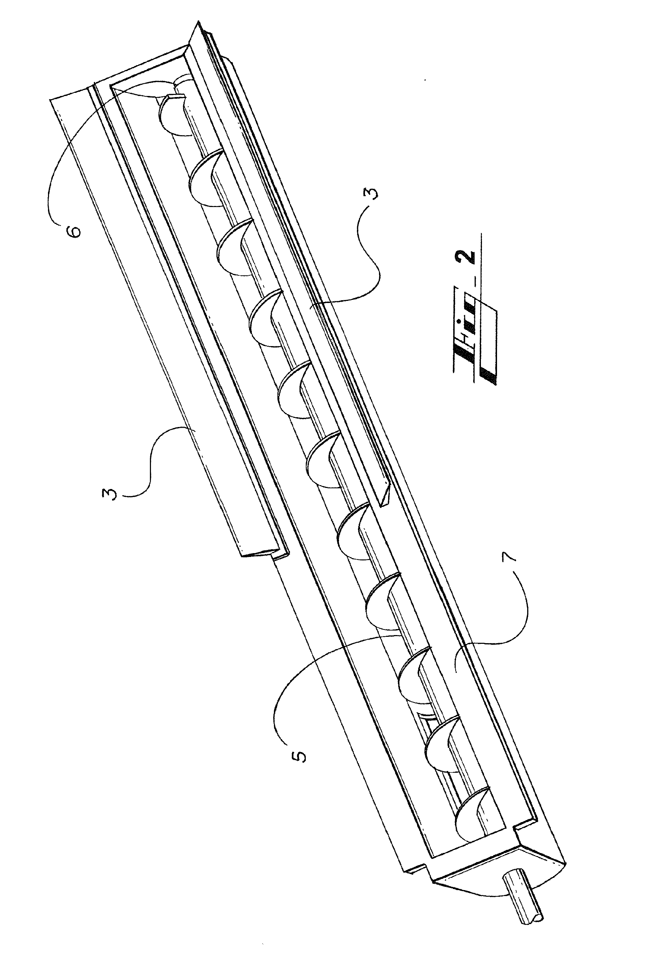

Turning now to the figures, in which like numerals indicate like elements, FIG. 1 schematically illustrates multiple filter discs **2** mounted on central shaft **1.** New conveyors **5** (*e.g.* illustrated in FIG. 2) are located between adjacent filter discs **2** and on the outside of the two outer filter discs **2.** The new conveyors **5,** which can each have a corresponding new conveyor trough **7,** where the new conveyors **5** are each contained inside of the new conveyor troughs **7,** are provided to catch the removed solids (*e.g.*, lime mud) removed via the scrapers **3.** The number of new conveyors **5** (and, if applicable, new conveyor troughs **7)** provided depends on the number of filter discs **2** used. A new conveyor **5** moves the solids removed by scrapers **3** adjacent the filter discs **2** to a pre-existing collection conveyor **12.** At the shaft end of the new conveyor trough **7** is a bearing **6** (*e.g.* illustrated in FIG. 2) for the new conveyor **5.**

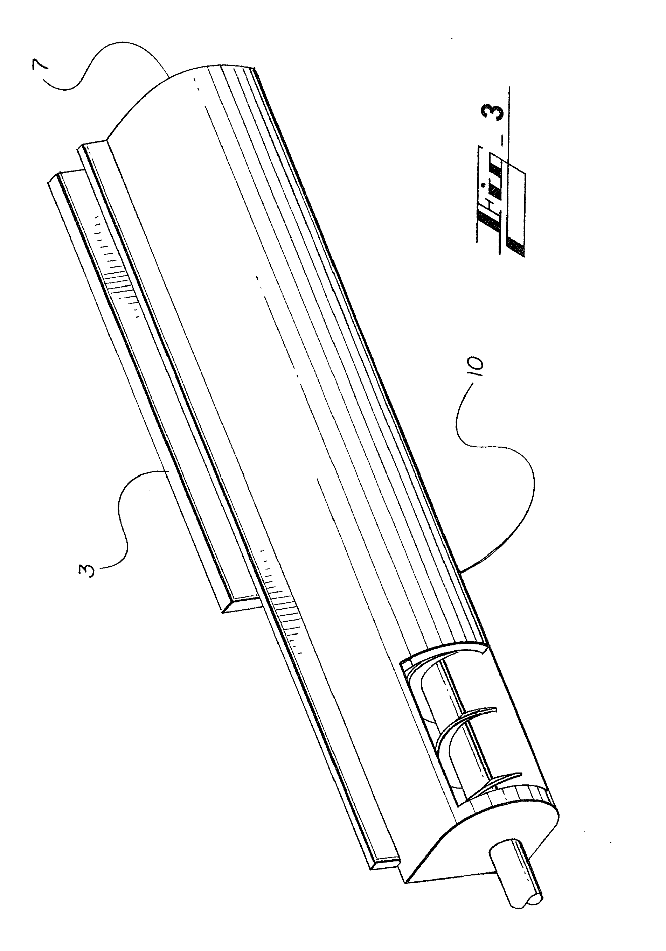

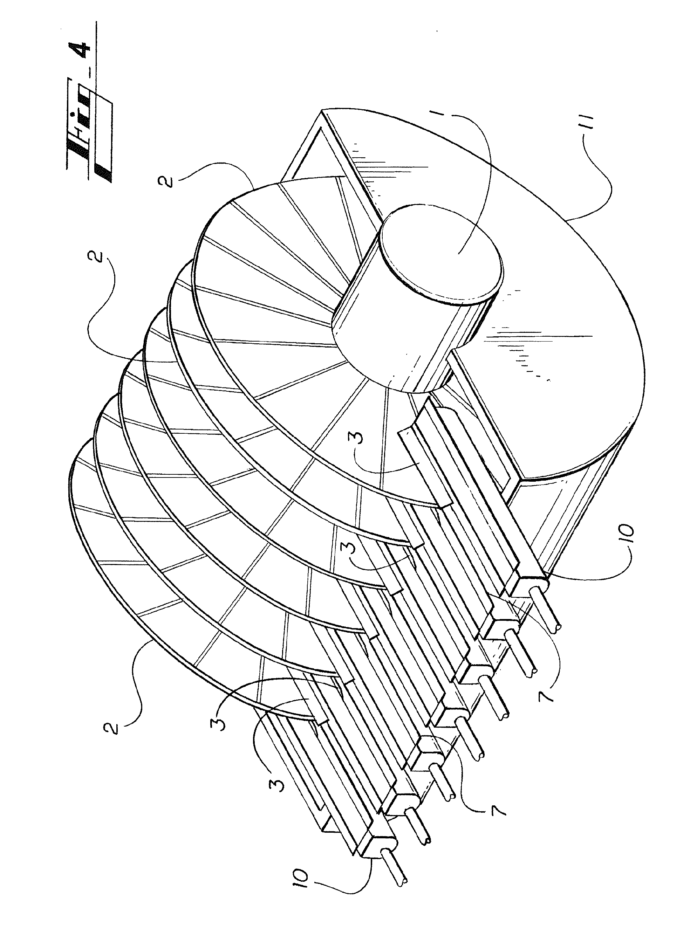

FIG. 2 illustrates an embodiment of a new conveyor **5,** which is a screw conveyor, comprising a screw housed within a new conveyor trough **7.** The new conveyor **5** moves the lime mud removed from the filter discs **2** (*e.g.* illustrated in FIG. 1) using the scrapers **3.** The scrapers **3** can be located on at least one side, but may be on either side or both sides, of the new conveyor troughs **7** along the top of the new conveyor troughs **7** extending from the central shaft end of the new conveyor troughs **7** to a point along the new conveyor troughs **7** where the filter discs **2** end. The new conveyor **5** extends outside the filter disc **2** and over a pre-existing collection conveyor **12,** and is mounted to a pre-existing vat **11** (*e.g.*, as illustrated in FIG. 4) at the crossing point **10** (*e.g.*, as illustrated in FIG. 3) where new conveyor **5** crosses pre-existing vat **11.** Optionally, a bearing **6** may be located at the new conveyor **5** outer end or new conveyor trough **7** outer end (not the shaft end). A motor (not shown) and gear reducer (not shown) may be attached to new conveyor **5** to provide movement as well as the correct speed to the new conveyor **5.**

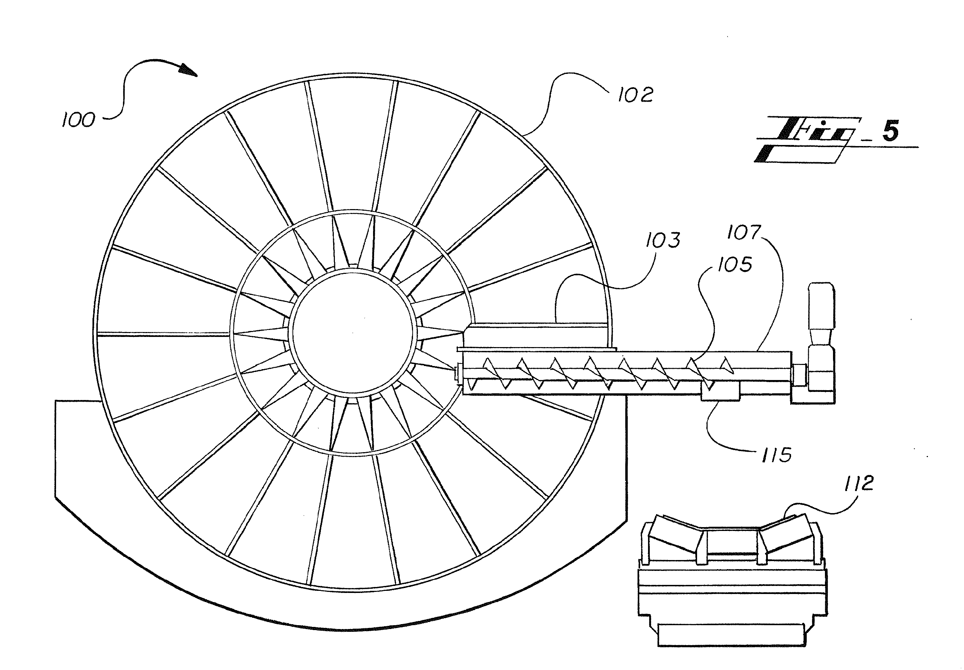

FIG. 3 illustrates the bottom of an embodiment of the new conveyor **5** (a screw conveyor) shown in FIG. 2. FIG. 3 details the bottom of the new conveyor trough **7** where an opening **(115** in FIG. 5) in the bottom of the new conveyor trough **7** allows the solids (lime mud) being removed from the filter discs **2** (*e.g.* illustrated in FIG. 1) to fall onto the pre-existing collection conveyor **12** (*e.g.* illustrated in FIG. 1) to be moved away from the disc filter structure.

Turning now to FIG. 5, a cross-sectional view of a disc filter apparatus **100,** as depicted in FIG. 1, is taken vertically through the length of the new conveyor **105** and a filter disc **102,** and perpendicularly to a pre-existing collection conveyor **112.** In this embodiment, a new conveyor **105,** which is a screw conveyor, but could be any type of conventional conveyor for conveying material from one point to another, is housed within a new conveyor trough **107.** The new conveyor **105** moves the lime mud removed from the filter discs **102** using the scrapers **103.** In this illustration, a cross-section of only one filter disc **102** and scraper **103** is shown for illustrative purposes, but the disc filter apparatus **100** comprises a plurality of filter discs **102** and scrapers **103.** New conveyor trough **107** has an opening **115** on a bottom side to allow the solids (lime mud) being removed from the filter discs **102** to fall onto the pre-existing collection conveyor **112** to be moved away from the filter structure.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the scope of the appended claims.

## Claims

1. A filtration apparatus (100) comprising:
a rotatable central shaft (1) having at least two filter discs (2, 102) that are attached perpendicularly to a length of the central shaft (1), the at least two filter discs (2, 102) each being generally cylindrical and having a diameter greater than a height;
a vat (11) adapted to contain a slurry of feed material having liquid and solids, and the at least two filter discs (2, 102) being configured to contact the slurry of feed material;
a pump configured to remove filtrate through the at least two filter discs (2, 102), such that solids form on at least one outside surface of a filter disc (2, 102); and
means for removing the solids formed on the at least one outside surface of at least one filter disc (2, 102);
**characterized by**
at least one first conveyor (5, 105) substantially perpendicular to the central shaft (1), the first conveyor being configured to move the removed solids to a second collection conveyor (12, 112) that is configured to collect the removed solids from the at least two filter discs (2, 102) for removal.

2. The filtration apparatus (100) of claim 1, further comprising at least one scraper (3, 103) configured to remove the solids formed on the at least one outside surface of at least one filter disc (2, 102).

3. The filtration apparatus (100) of claim 2, wherein the scrapers (3, 103) are located on either side of and above the at least one first conveyor (5, 105), and extend from the shaft end of the at least one first conveyor (5, 105) to a point along the at least one first conveyor (5, 105) where the filter discs (2, 102) end.

4. The filtration apparatus (100) of claim 1, wherein the at least one first conveyor (5, 105) extends beyond the vat wall and above the second collection conveyor (12, 112) and is mounted to the vat (11) at a crossing point (10) where the at least one first conveyor (5, 105) crosses the vat (11).

5. The filtration apparatus (100) of claim 1, wherein the at least one first conveyor (5, 105) further comprises at least one first conveyor trough (7, 107), and wherein an opening (115) in the bottom of the at least one first conveyor trough (7, 107) allows solids being removed from the filter discs (2, 102) to fall onto the second collection conveyor (12, 112) to be moved away from the filter disc (2, 102).

6. A method of filtering a slurry of feed material having liquid and solids, the method comprising the steps of:
feeding the slurry of feed material to a pre-existing vat (11);
dipping at least two filter discs (2, 102) attached to a central shaft (1) into the vat (11);
removing filtrate through the at least two filter discs (2, 102) and leaving solids on a surface of the at least two filter discs (2, 102);
removing the solids from the surface of the at least two filter discs (2, 102);
transferring the removed solids via at least one new conveyor (5, 105) that is substantially perpendicular to the central shaft (1); and
transferring the removed solids to a pre-existing collection conveyor (12, 112) for removal of the solids from the filter structure.

7. The method of claim 6, further comprising raising vat walls such that an entire filter disc surface may be submerged, wherein the sides of the vat (11) are the same height, and the overflow level is raised.

8. A method of converting a pre-existing rotary drum filter structure comprising a rotatable drum, a drum vat (11), and a collection conveyor (12, 112) into a disc filter structure, the method comprising:
removing the rotatable drum used as a filter and replacing the rotatable drum with at least two adjacent filter discs (2, 102) that are substantially cylindrical, each filter disc (2, 102) being attached to a rotatable central shaft (1) having an axis substantially coincident with each axis of the at least two filter discs (2, 102).

9. The method of converting a pre-existing rotary drum structure of claim 8, further comprising: providing at least two scrapers (3, 103) to remove solids from a surface of the at least two filter discs (2, 102).

10. The method of converting a pre-existing rotary drum structure of claim 8 or 9, further comprising: using pre-existing support foundation, pre-existing slurry feed material piping, and removal configurations for the converted filter structure.

11. The method of converting a pre-existing rotary drum filter structure of any one of claims 8 to 10, further comprising: providing at least one new conveying device between opposing surfaces of the at least two adjacent filter discs (2, 102).

12. The method of converting a pre-existing rotary drum filter structure of claim 11, wherein the at least one new conveying device comprises at least one new conveyor (5, 105) and at least one new conveyor trough (7, 107), and wherein the at least one new conveyor (5, 105) is at least partially housed inside the new conveyor trough (7, 107).

13. The method of converting a pre-existing rotary drum filter structure of claim 9 and 12, wherein the scrapers (3, 103) are located on at least one side of the new conveyor trough (7, 107) and along the top of the new conveyor trough (7, 107) extending from the central shaft end of the new conveyor trough (7, 107) to a point along the new conveyor trough (7, 107) where the filter discs (2, 102) end to remove solids from the filter structure.

14. The method of converting a pre-existing rotary drum filter structure of claim 12, wherein the new conveyor trough (7, 107) and the at least one new conveyor (5, 105) are substantially perpendicular to the central shaft (1) to transport the removed solids from the at least one new conveyor (5, 105) to the collection conveyor (12, 112).

15. The method of converting a pre-existing rotary drum filter structure of claim 12, further comprising: providing the collection conveyor (12, 112) substantially perpendicular to the at least one new conveyor (5, 105) for removal of solids from the filter structure.
